# EUROPEAN PATENT APPLICATION

(11) **EP 3 763 430 A1**
(43) Date of publication of application: **13.01.2021**
(21) Application number: 19210861.1
(22) Date of filing: 22.11.2019
(51) Int. Cl.: B01D 39/16

(54) **INTAKE FILTER FOR VEHICLE AND MANUFACTURING METHOD THEREOF**

(30) Priority: 10.07.2019 KR 20190083366
(71) Applicant: HYUNDAI MOTOR COMPANY, Seoul 06797 (KR); Kia Motors Corporation, Seoul 06797 (KR); Huvis Corporation, Seoul 06060 (KR)
(72) Inventor: SEO, Yong Gyo, 18280 Hwaseong-si, Gyeonggi-do (KR); JANG, Yong Seok, 18280 Hwaseong-si, Gyeonggi-do (KR); AHN, Sang Jun, 18280 Hwaseong-si, Gyeonggi-do (KR); JUNG, Jung Wu, 18280 Hwaseong-si, Gyeonggi-do (KR); CHUNG, Hyong Do, 18280 Hwaseong-si, Gyeonggi-do (KR); KIM, Young Hae, 18280 Hwaseong-si, Gyeonggi-do (KR); HWANG, Kyung Ho, 18280 Hwaseong-si, Gyeonggi-do (KR); KIM, Soo Hyun, 18280 Hwaseong-si, Gyeonggi-do (KR); KIM, Dong Eun, 18280 Hwaseong-si, Gyeonggi-do (KR); KIM, Nam Hoon, 18280 Hwaseong-si, Gyeonggi-do (KR)
(74) Representative: Viering, Jentschura & Partner mbB Patent- und Rechtsanwälte

(57) **Abstract**

A shaped cross-section composite fiber for an intake filter is manufactured from a single material of polypropylene, without separate binder processing by using the single material of polypropylene as a filter material. The shaped cross-section composite fiber includes: a sheath comprising a reformed polypropylene resin; and a core comprising a polypropylene resin, where the sheath and the core are combined to provide a sheath-core structure.

## Description

### BACKGROUND

### (a) Technical Field

The present disclosure relates to an intake filter for a vehicle, more particularly, to an intake filter made of a shaped cross-section composite fiber having a sheath-core structure, and a manufacturing method of the intake filter.

### (b) Description of the Related Art

Recently, the automotive industry has evolved toward the development of more reliable and intelligent automobiles, as well as higher energy efficiency and environment conservation. Accordingly, there have been increasing efforts for the development of smart cars, environmentally friendly automobiles, and lightweight materials.

Intake filters recently having been used in automobiles are manufactured from viscose rayon and cotton threads. Thus, existing intake filters may be costly to produce. When viscose rayon is made into fiber to manufacture intake filters, environmentally hazardous substances may be disadvantageously emitted, due to the use of carbon disulfide and caustic soda. A binder used in intake filters may also disadvantageously emit environmentally hazardous substances when discarded.

Accordingly, there has been demand for an environmentally-friendly intake filter having a simplified structure, in which the costs, weight, and the number of process steps to manufacture the intake filter are reduced due to improved materials.

The information disclosed in the Background of the Disclosure section is only for the enhancement of understanding of the background of the disclosure, and should not be taken as an acknowledgment or as any form of suggestion that this information forms a prior art that would already be known to a person skilled in the art.

### SUMMARY

An object of the present disclosure is to provide a shaped cross-section composite fiber for an intake filter, the composition of which includes polypropylene.

Also provided is an intake filter including the shaped cross-section composite fiber for an intake filter.

Also provided is a method of manufacturing an intake filter, the composition of which includes polypropylene.

In order to achieve the above object, according to one aspect of the present disclosure, a shaped cross-section composite fiber for an intake filter may include a sheath comprising a reformed polypropylene resin; and a core comprising a polypropylene resin, wherein the sheath and the core are combined to provide a sheath-core structure.

The content of the sheath may range from 40 wt% to 60 wt%, and the content of the core may range 40 wt% to 60 wt%.

The reformed polypropylene resin may be one selected from the group consisting of propylene, ethylene, butene, and combinations thereof.

The reformed polypropylene resin may be one selected from the group consisting of random copolymer, random terpolymer, and combinations thereof.

The sheath may further comprise peroxide.

The reformed polypropylene resin may have a melting point of 130°C to 135°C and a melt flow rate of 17g/10min to 23g/10min.

The polypropylene resin may have a melting point of 160°C to 163°C and a melt flow rate of 13g/10min to 19g/10min.

The shaped cross-section composite fiber may have a fineness value of 1 to 5 deniers.

The shaped cross-section of the shaped cross-section composite fiber may have a structure selected from the group consisting of a circular structure, an elliptical structure, a rectangular structure, a concave-convex structure, a hollow structure, a structure comprised of circles or rectangles connected in line, and combinations thereof.

The core may have a cross-sectional shape the same as or different from the cross-sectional shape of the shaped cross-section of the shaped cross-section composite fiber.

According to another aspect of the present disclosure, an intake filter may include an unwoven cloth layer including a fine layer, a middle layer, and a bulk layer. Each of the fine layer, the middle layer, and the bulk layer may include a shaped cross-section composite fiber for an intake filter, where the shaped cross-section composite fiber includes: a sheath comprising a reformed polypropylene resin; and a core comprising a polypropylene resin, where the sheath and the core are combined to provide a sheath-core structure.

The ratio of a polypropylene fiber in the fine layer with respect to the shaped cross-section composite fiber for an intake filter may range from 0.33 to 0.81. The polypropylene fiber and the shaped cross-section composite fiber may have a diameter of 10 µm to 30 µm and a weight of 20 g/m² to 150 g/m².

The ratio of a polypropylene fiber in the middle layer with respect to the shaped cross-section composite fiber for an intake filter may range from 0.42 to 0.81. The polypropylene fiber and the shaped cross-section composite fiber may have a diameter of 20 µm to 50 µm and a weight of 10 g/m² to 50 g/m².

The ratio of a polypropylene fiber in the bulk layer with respect to the shaped cross-section composite fiber for an intake filter may range from 0.11 to 0.18. The polypropylene fiber and the shaped cross-section composite fiber may have a diameter of 30 µm to 80 µm and a weight of 10 g/m² to 50 g/m².

The intake filter may have a trapping efficiency of 82% to 89%, a pressure loss of 2.6 mmAq to 3.1 mmAq, air restriction of 47.80 mmAq to 48.20 mmAq, an initial efficiency of 98.40% to 98.70%, a final efficiency of 99.50% to 99.65% and dirt holding capacity of 170g to 188g.

According to another aspect of the present disclosure, a method of manufacturing an intake filter may include: manufacturing an unwoven cloth layer including a fine layer, a middle layer, and a bulk layer by carding; manufacturing composite unwoven cloth by performing needle punching to the unwoven cloth layer; heat-treating the composite unwoven cloth; and winding the heat-treated composite unwoven cloth.

The needle punching may be performed such that the number of times of punching the unwoven cloth layer is 10 to 100 times per 1cm² of the unwoven cloth layer and a depth of penetration into the unwoven cloth layer is 2 mm to 15 mm.

The heat treatment may be performed at a temperature of 100°C to 170°C for a time length of 10 to 30 seconds.

The winding may be performed at a speed of 5 M/min to 30 M/min.

The intake filter according to the present disclosure includes the shaped cross-section composite fiber for an intake filter, manufactured from a single material of polypropylene. The intake filter can reduce costs and weight by simplification of materials while maintaining the same performance as conventional intake filters, and can block moisture from entering the engine by improving water repellency in order to prevent a rise in intake pressure and improve the endurance and performance of the engine. The reusability of the intake filter is improved, since a filter material is an environmentally friendly material, such as polypropylene, without containing an environmentally hazardous substance, such as viscose rayon or a binder, unlike conventional intake filters.

In addition, the method of manufacturing an intake filter according to the present disclosure manufactures an intake filter under optimal processing conditions without separate binder processing by using a single material of polypropylene as a filter material. Accordingly, it is possible to provide an intake filter having improved economic competitiveness due to the reduced number of components and process steps while maintaining the same performance as conventional intake filters.

The effects of the present disclosure are not limited to those aforementioned. It should be understood that the effects of the present disclosure shall include all effects inducible from the following description.

### BRIEF DESCRIPTION OF THE DRAWINGS

The above and other objects, features and advantages of the present disclosure will be more clearly understood from the following detailed description when taken in conjunction with the accompanying drawings, in which:
FIG. 1 is a view schematically illustrating a shaped cross-section composite fiber having a sheath-core structure for an intake filter;
FIGS. 2A to 2H are views schematically illustrating various configurations of shaped cross-section composite fibers for an intake filter;
FIG. 3 is a view schematically illustrating the structure of the unwoven cloth layer; and
FIG. 4 is a flowchart illustrating a method of manufacturing an intake filter according to an embodiment of the present disclosure.

### DETAILED DESCRIPTION OF THE DISCLOSURE

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g., fuels derived from resources other than petroleum). As referred to herein, a hybrid vehicle is a vehicle that has two or more sources of power, for example both gasoline-powered and electric-powered vehicles.

The terminology used herein is for the purpose of describing particular embodiments only and is not intended to be limiting of the disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Throughout the specification, unless explicitly described to the contrary, the word "comprise" and variations such as "comprises" or "comprising" will be understood to imply the inclusion of stated elements but not the exclusion of any other elements. In addition, the terms "unit", "-er", "-or", and "module" described in the specification mean units for processing at least one function and operation, and can be implemented by hardware components or software components and combinations thereof.

Further, the control logic of the present disclosure may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN).

The above and other objects, features and advantages of the present disclosure will be more clearly understood from the following detailed description when taken in conjunction with the accompanying drawings. It should be understood, however, that the present disclosure is not limited to the following embodiments but may be embodied in a variety of other forms. The embodiments set forth herein are provided for illustrative purposes to fully convey the concept of the present disclosure to those having ordinary knowledge in the technical field.

All numbers, values and/or expressions representing ingredients, reaction conditions, and quantities of polymer compositions and combinations used in the specification are to be understood as being approximates, in which a variety of uncertainties of measurement essentially occurring from among others when obtaining such numbers, values and/or expressions are reflected, and thus, are to be modified in all instances by the term "about." Accordingly, a numerical range set forth herein is to be understood as being continuous and including all values from a minimum value to a maximum value in that range, unless indicated to the contrary. Furthermore, a range indicating integers is to be understood as including all integers from a minimum value to a maximum value in that range, unless indicated to the contrary.

A shaped cross-section composite fiber for an intake filter according to an embodiment of the present disclosure includes a sheath comprising a reformed polypropylene resin, the amount of the sheath ranging, by weight, 40% to 60%, and a core comprising a polypropylene resin, the amount of the core ranging, by weight, 40% to 60%. The sheath may further comprise peroxide.

It is to be understood hereinafter that the contents of components of a composite fiber for an intake filter are indicated by weight percent on the basis of the total weight of the composite fiber for an intake filter, i.e. by setting the total weight of the composite fiber for an intake filter to be 100 percent by weight. When the basis is to be changed, the new basis will be indicated clearly, so that those skilled in the art will be able to determine a composition, on the basis of which the contents are indicated.

### Shaped Cross-section Composite Fiber for Intake Filter

### (1) Sheath

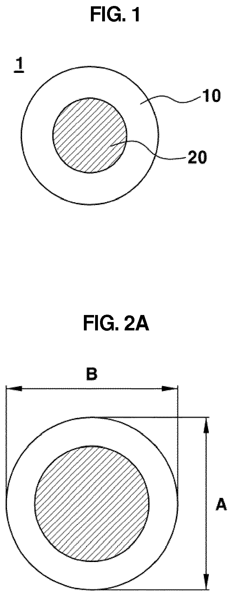

A shaped cross-section composite fiber 1 for an intake filter according to an embodiment of the present disclosure includes a sheath 10. The weight of the sheath 10 can be reduced by 30% or more than those of conventional fibers, and can serve as a binder fiber due to the melting point thereof being different from that of a core of the composite fiber. The structure of the sheath is not specifically limited as long as the sheath surrounds the core of the composite fiber, as illustrated in FIG. 1.

The sheath according to the present disclosure may be made of a resin produced by reforming a single material. For example, the sheath may be a resin produced by reforming polypropylene, polyethylene, or polybutene. The sheath may comprise a reformed polypropylene resin able to reduce the weight by 30% or more, compared to those of conventional fibers, and providing a superior water blocking function due to superior water repellency.

The reformed polypropylene resin of the sheath according to the present disclosure may be a low melt (LM) polypropylene resin, a polypropylene resin formed by compounding long glass fiber, a hydrophilic polypropylene resin, or the like. The reformed polypropylene resin may be an LM polypropylene resin able to lower the melting point by 20°C or more, compared to that of polypropylene, so as to obtain a binder fiber function.

The reformed polypropylene resin according to the present disclosure may be one selected from among a random copolymer, a random terpolymer, or combinations thereof. The reformed polypropylene resin may be a random terpolymer so as to provide an LM polypropylene resin, the molecular structure of which is efficiently reformed.

The reformed polypropylene resin according to the present disclosure may comprise a random copolymer or a random terpolymer, and thus, may be produced by using propylene, ethylene, and butene using a comonomer.

In the sheath according to the present disclosure, a material for improving spinning processability may be further added, and peroxide able to efficiently control melt flow rate may be further added.

The peroxide according to the present disclosure may be added in a small amount of 50 ppm to 350 ppm. If the amount of peroxide is less than 50 ppm, melt flow viscosity may be increased compared to a resin in a core, so that the shaped cross-section may be defective when the sheath surrounds the core. If the amount of peroxide is greater than 350 ppm, flowability may be excessive, thereby causing a problem in thread drawing.

The peroxide added to the sheath according to the present disclosure may induce peroxidative degradation due to a peroxide cracker, thereby efficiently control melt flow rate.

The melting point of the reformed polypropylene resin of the sheath according to the present disclosure ranges from 130°C to 135°C, and melt flow rate (MFR) ranges from 17g/10min to 23g/10min. If the melt flow rate is less than 17 g/10min, the shaped cross-section may be defective when the sheath surrounds the core. If the melt flow rate is greater than 23g/10min, flowability may be excessive, thereby causing a problem in thread drawing.

The sheath according to the present disclosure may have a weight ranging from 40 wt% to 60 wt%. If the weight of the sheath is less than 40 wt%, when the sheath is formed from unwoven cloth, the properties of the unwoven cloth may be lowered, due to decreased adhesion. If the weight of the sheath is greater than 60 wt%, yarn properties may be lowered, due to the reduced weight percent of the core.

That is, the sheath according to the present disclosure can serve as a binder fiber, due to the melting point thereof differing from that of the core comprising a reformed polypropylene resin according to the present disclosure by 20°C or more, while having improved flowability, due to peroxide added thereto, thereby obtaining superior processability.

### (2) Core

A core 20, included in the shaped cross-section composite fiber 1 for an intake filter according to the embodiment of the present disclosure, is configured such that the weight thereof can be reduced from those of conventional fibers by 30% or more. The structure of the core is not specifically limited as long as the core is located in the central portion of the composite fiber, as illustrated in FIG. 1.

The core according to the present disclosure may be a homopolymer resin produced by polymerizing single monomers. For example, the core may be a resin made of polypropylene, polyethylene, or polybutene. The core may comprise a polypropylene resin able to reduce the weight by 30% or more, compared to those of conventional fibers, and providing a superior water blocking function due to superior water repellency.

The polypropylene resin of the core according to the present disclosure may have a melting point ranging from 160°C to 163°C and a melt flow rate (MFR) ranging from 13g/10min to 19g/10min. If the melt flow rate is less than 13g/10min, thread drawing may be disadvantageously defective, due to a difference in flowability between the core and the sheath. If the melt flow rate exceeds 19g/10min, flowability may be excessive, so that the cross-sectional shape, in which the sheath surrounds the core, may be defective.

The weight of the core according to the present disclosure may range from 40 wt% to 60 wt%. If the weight is less than 40 wt%, yarn properties may be lowered, due to the reduced weight percent of the core. If the weight is greater than 60 wt%, when the core is formed from unwoven cloth, the properties of the unwoven cloth may be lowered, due to decreased adhesion.

### (3) Shaped Cross-Section Composite Fiber having Sheath-Core for Intake Filter

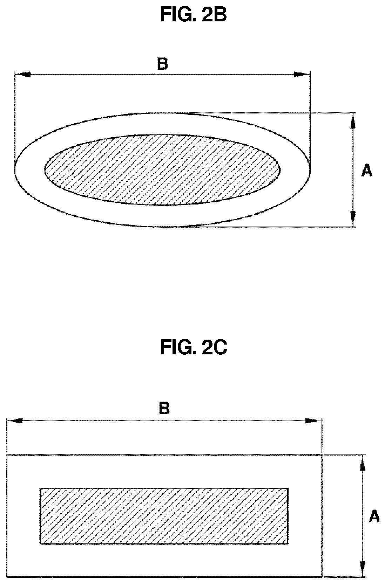

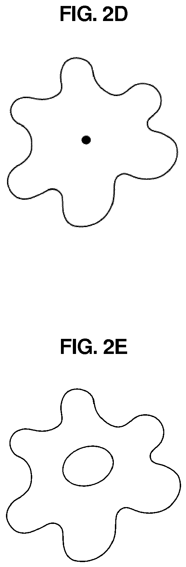

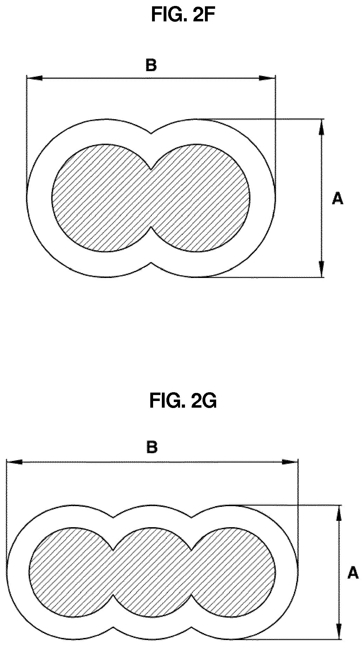

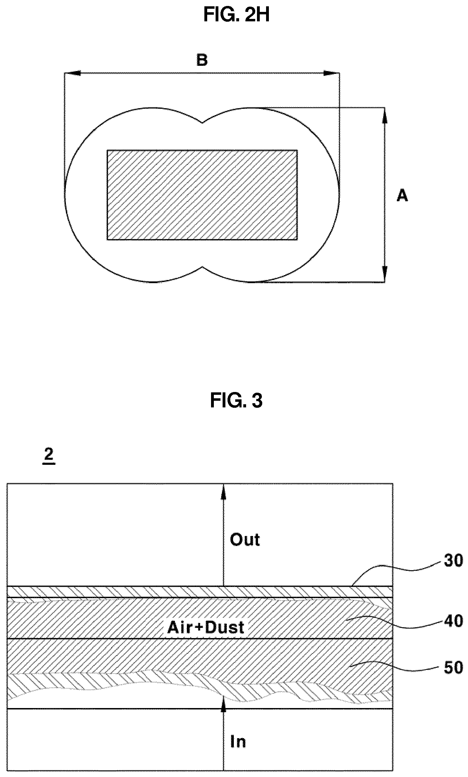

In the shaped cross-section composite fiber for an intake filter according to the present disclosure, the cross-section ratio B/A of the shaped cross-section may be 1.5 or more. If the cross-section ratio is less than 1.5, characteristics for high density unwoven cloth may not be maintained, thereby failing to provide an intake filter function. In this regard, the structure of the shaped cross-section according to the present disclosure may be one selected from among, but not limited to, a circular structure as illustrated in FIG. 2A, an elliptical structure as illustrated in FIG. 2B, a rectangular structure as illustrated in FIG. 2C, a concave-convex structure as illustrated in FIG. 2D, a hollow structure as illustrated in FIG. 2E, structures respectively comprised of circles connected in line as illustrated FIGS. 2F to 2H, or combinations thereof. For example, the shaped cross-section having a concave-convex structure can advantageously improve filter efficiency, due to increased surface area thereof. The shaped cross-section having a hollow structure has a lighter weight effect, compared to the other structures. Particularly, the shaped cross-section of according to the present disclosure may have an elliptical structure or a concave-convex structure. In addition, the shape of the shaped cross-section of the composite fiber for an intake filter according to the present disclosure may be the same as the cross-sectional shape of the core as illustrated in FIGS. 2F and 2G or be different from the cross-sectional shape of the core as illustrated in FIG. 2H. Accordingly, the intake filter including the shaped cross-section composite fiber having a sheath-core structure for an intake filter according to the present disclosure has superior trapping efficiency, due to characteristics of the shape of the shaped cross-section.

In addition, the fineness of the shaped cross-section composite fiber for an intake filter, including the shaped cross-section, may range from 1 to 5 deniers. If the fineness is less than 1 denier, processability may disadvantageously defective due to rolling in the carding.

In addition, the shaped cross-section composite fiber for an intake filter according to the embodiment of the present disclosure includes the core in the central portion of the fiber and the sheath surrounding the core. That is, the present disclosure is characterized in that the sheath can serve as a binder, while the core can serve to maintain the shape and adjusting the space between fibers. That is, in the intake filter including the unwoven cloth layer including the composite fiber, an unwoven cloth shape can be fixed via the core. Afterwards, the unwoven cloth shape can be strongly fixed once more by the heat treatment of the method of manufacturing an intake filter according to the present disclosure without a heat-treating binding process, due to the lower melting point of the sheath. In addition, since the sheath and the core are composed of polypropylene alone, the weight of the shaped cross-section composite fiber is reduced by 30% or more, compared to those of conventional composite fibers, and the water repellency of the shaped cross-section composite fiber is excellent.

### Intake filter

The intake filter according to an embodiment of the present disclosure may include the shaped cross-section composite fiber for an intake filter according to the present disclosure, and may have a three-layer structure comprised of three layers having different functions and different composition ratios. The three layer structure may be comprised of unwoven cloth layers, including a fine layer, a middle layer, and a bulk layer.

### (1) Fine layer

A fine layer 30 according to the present disclosure has a composition having superior filtering efficiency and superior air permeability while having a superior shape maintaining function due to high flexing endurance. The fine layer is not specifically limited as long as the fine layer is located in the uppermost layer of the three-layer structure, as illustrated in FIG. 3. The fine layer according to the present disclosure may be provided by adjusting, for example, the ratios of polypropylene fiber and the shaped cross-section composite fiber for an intake filter according to the present disclosure, on the basis of the above-described functions. The ratio of the shaped cross-section composite fiber for an intake filter ranges from 55 wt% to 75 wt% of the total weight of the fine layer. The ratio of the polypropylene fiber with respect to the shaped cross-section composite fiber for an intake filter may range from 0.33 to 0.81. If the ratio of the polypropylene fiber is less than 55 wt%, the efficiency of dust removing performance may be disadvantageously lowered. If the ratio of the polypropylene fiber is greater than 75 wt%, air restriction and the amount of dust trapped may be disadvantageously reduced. In addition to the weight percent of the shaped cross-section composite fiber for an intake filter, the polypropylene fiber and the shaped cross-section composite fiber for an intake filter according to the present disclosure may have a diameter ranging from 10 µm to 30 µm, and a weight ranging from 20 g/m² to 150 g/m². If the diameter is less than 10 µm, air restriction and the amount of dust trapped may be disadvantageously reduced. If the diameter is greater than 30 µm, the efficiency of dust removing performance may be disadvantageously lowered. In addition, if the weight is less than 20 g/m², the efficiency of dust removing performance may be disadvantageously lowered. If the weight is greater than 150 g/m², air restriction and the amount of dust trapped may be disadvantageously reduced.

As a result, in the fine layer according to the present disclosure, the ratio of the polypropylene fiber with respect to the shaped cross-section composite fiber for an intake filter may range from 0.33 to 0.81. The diameter of the polypropylene fiber and the shaped cross-section composite fiber may range from 10 µm to 30 µm, and the weight of the polypropylene fiber and the shaped cross-section composite fiber may range from 20 g/m² to 150 g/m². In a situation in which the above-described conditions are satisfied, the intake filter can have superior flexing endurance and superior shape maintaining performance while having superior filtering efficiency, such as negative intake pressure and initial efficiency, and superior air permeability.

### (2) Middle Layer

A middle layer 40 according to the present disclosure has a composition having superior air permeation restriction, superior final efficiency, and superior dust collecting performance. The middle layer is not specifically limited as long as the middle layer is located in the middle layer of the three-layer structure, as illustrated in FIG. 3. The middle layer according to the present disclosure may be provided by adjusting, for example, the ratios of polypropylene fiber and the shaped cross-section composite fiber for an intake filter according to the present disclosure, on the basis of the above-described functions. The ratio of the shaped cross-section composite fiber for an intake filter ranges from 45 wt% to 55 wt% of the total weight of the middle layer. The ratio of the polypropylene fiber with respect to the shaped cross-section composite fiber for an intake filter may range from 0.42 to 0.81. If the ratio of the polypropylene fiber is less than 45 wt%, the efficiency of dust removing performance may be disadvantageously lowered. In addition to the weight percent of the shaped cross-section composite fiber for an intake filter, the polypropylene fiber and the shaped cross-section composite fiber for an intake filter according to the present disclosure may have a diameter ranging from 20 µm to 50 µm, and a weight ranging from 10 g/m² to 50 g/m². If the diameter is less than 20 µm, the amount of dust trapped may be disadvantageously reduced. If the diameter is greater than 50 µm, the efficiency of dust removing performance may be disadvantageously lowered. In addition, if the weight is less than 10 g/m², the efficiency of dust removing performance may be disadvantageously lowered. If the weight is greater than 50 g/m², the amount of dust trapped may be disadvantageously reduced.

As a result, in the middle layer according to the present disclosure, the ratio of the polypropylene fiber with respect to the shaped cross-section composite fiber for an intake filter may range from 0.42 to 0.81. The diameter of the polypropylene fiber and the shaped cross-section composite fiber may range from 20 µm to 50 µm, and the weight of the polypropylene fiber and the shaped cross-section composite fiber may range from 10 g/m² to 50 g/m². In a situation in which the above-described conditions are satisfied, the intake filter can have superior air permeation restriction, superior final efficiency, superior dust trapping performance, and superior life performance (or dirt holding capacity).

### (3) Bulk Layer

A bulk layer 50 according to the present disclosure has a composition having superior air permeation restriction and superior dust collecting performance. The bulk layer is not specifically limited as long as the bulk layer is located in the lower layer of the three-layer structure, as illustrated in FIG. 3. The bulk layer according to the present disclosure may be provided by adjusting, for example, the ratios of polypropylene fiber and the shaped cross-section composite fiber for an intake filter according to the present disclosure, on the basis of the above-described functions. The ratio of the shaped cross-section composite fiber for an intake filter ranges from 10 wt% to 15 wt% of the total weight of the bulk layer. The ratio of the polypropylene fiber with respect to the shaped cross-section composite fiber for an intake filter may range from 0.11 to 0.18. If the ratio of the polypropylene fiber is less than 10 wt% or greater than 15 wt%, the efficiency of dust removing performance may be disadvantageously lowered. In addition to the weight percent of the shaped cross-section composite fiber for an intake filter, the polypropylene fiber and the shaped cross-section composite fiber for an intake filter according to the present disclosure may have a diameter ranging from 30 µm to 80 µm, and a weight ranging from 10 g/m² to 50 g/m². If the diameter is less than 30 µm or greater than 80 µm, the amount of dust trapped may be disadvantageously reduced. If the weight is less than 10g/m² or greater than 50 g/m², the amount of dust trapped may be disadvantageously reduced.

As a result, in the bulk layer according to the present disclosure, the ratio of the polypropylene fiber with respect to the shaped cross-section composite fiber for an intake filter may range from 0.11 to 0.18. The diameter of the polypropylene fiber and the shaped cross-section composite fiber may range from 30 µm to 80 µm, and the weight of the polypropylene fiber and the shaped cross-section composite fiber may range from 10 g/m² to 50 g/m². In a situation in which the above-described conditions are satisfied, the intake filter can have superior air permeation restriction, superior dust trapping performance, and superior life performance.

### (4) Intake Filter

The intake filter including the unwoven cloth layer having the above-described three-layer structure according to the present disclosure can effectively trap impurities, due to gravitation, inertia, interception, and diffusion effects. Accordingly, the intake filter according to the present disclosure increases water repellency using polypropylene as a filter medium, thereby increasing water-blocking effects. The intake filter is characterized in that dust is stuck to the filter due to moisture to block an air gap, thereby increasing intake pressure. Accordingly, the intake filter according to the present disclosure may have a trapping efficiency of 82% to 89%, a pressure loss of 2.6 mmAq to 3.1 mmAq, air restriction of 47.80 mmAq to 48.20 mmAq, an initial efficiency of 98.40% to 98.70%, a final efficiency of 99.50% to 99.65%, and dirt holding capacity (DHC) of 170g to 188g. In addition, the intake filter according to the present disclosure may have a thickness of 2.0 mm to 3.5 mm, and particularly, 3 mm. If the thickness is less than 2.0 mm, there may be drawbacks, such as increased air restriction and the reduced amount of dust trapped. If the thickness is greater than 3.5 mm, dust removing efficiency may be disadvantageously reduced.

### Method of Manufacturing Intake Filter

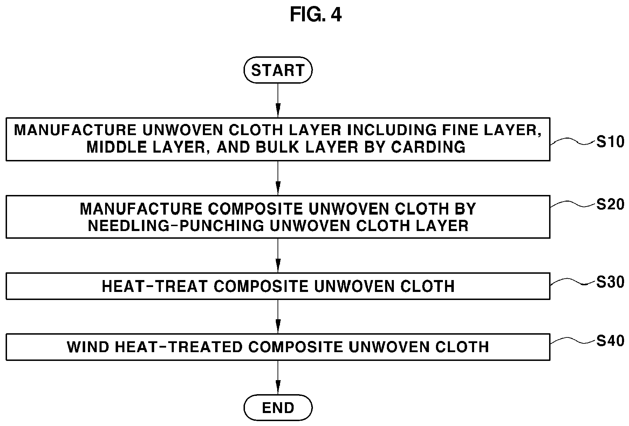

FIG. 4 is a flowchart illustrating a method of manufacturing an intake filter according to an embodiment of the present disclosure. Referring to FIG. 4, the method may include step S10 of manufacturing an unwoven cloth layer including a fine layer, a middle layer, and a bulk layer by carding; step S20 of manufacturing composite unwoven cloth by performing needle punching to unwoven cloth layers; step S30 of heat-treating the composite unwoven cloth; and step S40 of winding the heat-treated composite unwoven cloth.

The step S10 of manufacturing the unwoven cloth layer by carding is a step of manufacturing the unwoven cloth layer having a three-layer structure, comprised of the fine layer, the middle layer, and the bulk layer, by carding. The carding according to the present disclosure can manufacture the unwoven cloth layer comprised of three or more layers having different densities by modifying fiber contents and weights by using three or more carding devices. The fiber contents and weights of fine layer, the middle layer, and the bulk layer of the unwoven cloth layer are the same as those described above.

The step S20 of performing needle punching to unwoven cloth layers is a step of manufacturing the composite unwoven cloth by performing needle punching to the unwoven cloth layers, including the fine layer, the middle layer, and the bulk layer. Here, characteristics and physical properties of the composite unwoven cloth may be varied, depending on the number of times of the needle punching and the depth of the needle punching. The needle punching according to the present disclosure may be controlled such that the depth to which a needle penetrates into the unwoven cloth ranges from 2 mm to 15 mm and the number of times of punching the unwoven cloth ranges from 10 to 100 times per 1 cm², so that the unwoven cloth layers are bound and are converted to have physical properties adequate to the present disclosure. If the depth of the needle punching is less than 2 mm, shape reliability may be disadvantageously lowered. If the depth of the needle punching is greater than 15 mm, there may be drawbacks, such as increased air restriction and the reduced amount of dust trapped. In addition, if the number of times of punching is less than 10 times per 1 cm², shape reliability may be disadvantageously lowered. If the number of times of punching is greater than 100 times per 1 cm², there may be drawbacks, such as increased air restriction and the reduced amount of dust trapped. In a situation in which the needle punching is performed by satisfying these conditions, the composite unwoven cloth can be manufactured with uniform tensile strength and uniform tensile elongation.

The step S30 of heat-treating the composite unwoven cloth is a step of heat-treating the composite unwoven cloth manufactured by the needle punching, so that the sheath of the shaped cross-section composite fiber for an intake filter of the composite unwoven cloth is melted, thereby more stringing binding the composite unwoven cloth. It is characterized in that characteristics and physical properties of the composite unwoven cloth may be varied, depending on the heat treatment according to the present disclosure or a suitable temperature and a suitable time length. In particular, in the present disclosure using polypropylene as a filter medium, there is no significant difference between the melting point between the sheath and the core, and thus, the temperature and time conditions should be more accurately controlled. Accordingly, the heat treatment according to the present disclosure may be controlled such that the temperature is in the range of 100°C to 170°C, and the time is in the range of 10 to 30 seconds. If the temperature is lower than 100°C, shape reliability may be disadvantageously lowered. If the temperature is higher than 170°C, the fiber may be disadvantageously dissolved, and thus, unwoven cloth may not be formed. In addition, the heat treatment time is shorter than 10 seconds, shape reliability may be disadvantageously lowered. If heat treatment time exceeds 30 seconds, the fiber may be disadvantageously dissolved, and thus, unwoven cloth may not be formed.

The step S40 of winding the heat-treated composite unwoven cloth is a step of manufacturing the composite unwoven cloth having market quality by winding the heat-treated composite unwoven cloth. That is, in the winding, the winding speed should be suitably controlled depending on the manufacturing speed of the composite unwoven cloth in order to product the composite unwoven cloth having an appearance having market quality. Accordingly, the winding speed according to the present disclosure may be controlled to be in the range of 5 M/min to 30 M/min. If the winding speed is slower than 5 M/min, the fiber may be disadvantageously dissolved, and thus, unwoven cloth may not be formed. If the winding speed exceeds 30 M/min, shape reliability may be disadvantageously lowered.

Hereinafter, the present disclosure will be described in more detail with reference to the following Examples. The following Examples are provided for illustrative purposes only for a better understanding, and the scope of the present disclosure is not limited thereto.

### Example 1

Composite Fiber for Intake Filter: A shaped cross-section composite fiber for an intake filter, included in the unwoven cloth layer, was manufactured. Specifically, a low-melt (LM) polypropylene resin, i.e. a random terpolymer, was manufactured by reacting propylene, butene, and ethylene using a comonomer. A sheath was manufactured by adding peroxide 150 ppm to the LM polypropylene resin. Then, composite fiber for an intake filter, comprised of a 50 wt% sheath and a 50 wt% core, was manufactured by surrounding the core comprising a polypropylene resin, i.e. a homopolymer, with the sheath. Here, the shaped cross-section of the composite fiber for an intake filter was elliptical, and the fineness of the composite fiber was 1.5 deniers.

S10: A fine layer, a middle layer, and a bulk layer of a three-layer structure of the unwoven cloth layer were respectively manufactured using three or more carding devices in the carding.

Specifically, in the fine layer manufactured by the carding, the ratio of the shaped cross-section composite fiber for an intake filter was 65 wt% of the total weight of the fine layer, the ratio of the polypropylene fiber with respect to the shaped cross-section composite fiber for an intake filter was 0.53, the diameter of the fiber was 10 µm to 25 µm, and the weight of the fiber was 80 g/m² to 150 g/m². In the middle layer manufactured by the carding, the ratio of the shaped cross-section composite fiber for an intake filter was wt% of the total weight of the middle layer, the ratio of the polypropylene fiber with respect to the shaped cross-section composite fiber for an intake filter was 0.81, the diameter of the fiber was 20 µm to 50 µm, and the weight of the fiber was 20 g/m² to 50 g/m². In the bulk layer manufactured by the carding, the ratio of the shaped cross-section composite fiber for an intake filter was 10 wt% of the total weight of the bulk layer, the ratio of the polypropylene fiber with respect to the shaped cross-section composite fiber for an intake filter was 0.11, the diameter of the fiber was 40 µm to 80 µm, and the weight of the fiber was 20 g/m² to 50 g/m².

S20: Unwoven cloth layers, respectively including the fine layer, the middle layer, and the bulk layer manufactured by the carding, were stacked on one another, and the unwoven cloth layer were bound together by the needle punching, in specific punching conditions in which the needle depth was 5 mm to 12 mm and the number of times of punching was 20 to 80, thereby manufacturing composite unwoven cloth.

S30 and S40: Sheets of composite unwoven cloth manufactured as above were subjected to heat treatment at 145°C for 20 to 60 seconds, thereby increasing physical binding of the sheets of composite unwoven cloth. Afterwards, the heat-treated composite unwoven cloth was wound at a rate of 10 M/min to 30 M/min, thereby manufacturing an intake filter.

### Examples 2 to 3

Intake filters were manufactured in the same method as Example 1, except that the shaped cross-section of the composite fiber for an intake filter had a concave-convex structure.

### Example 4

An intake filter was manufactured in the same method as Example 1, except that the composite fiber for an intake filter was manufactured using an LM polypropylene resin, i.e. a random copolymer, by reacting propylene and ethylene using a comonomer.

### Example 5

An intake filter was manufactured in the same method as Example 4, except that the shaped cross-section of the composite fiber for an intake filter had a concave-convex structure.

### Example 6

An intake filter was manufactured in the same method as Example 1, except that the intake filter was manufactured by controlling the ratio of the shaped cross-section composite fiber for an intake filter of the fine layer to be 60 wt% of the total weight of the fine layer.

### Example 7

An intake filter was manufactured in the same method as Example 1, except that the intake filter was manufactured by controlling the ratio of the shaped cross-section composite fiber for an intake filter of the fine layer to be 70 wt% of the total weight of the fine layer.

### Example 8

An intake filter was manufactured in the same method as Example 1, except that the intake filter was manufactured by controlling the ratio of the shaped cross-section composite fiber for an intake filter of the fine layer to be 55 wt% of the total weight of the fine layer.

### Comparative Example 1

An intake filter was manufactured in the same method as Example 1, except that the composite fiber for an intake filter (with a shaped cross-section there being circular) was manufactured using the sheath comprising a polypropylene resin, i.e. a homopolymer.

### Comparative Example 2

An intake filter was manufactured in the same method as Example 1, except that the composite fiber for an intake filter was manufactured using an LM polypropylene resin, i.e. a random copolymer, by reacting propylene and ethylene using a comonomer.

### Comparative Example 3

An intake filter was manufactured in the same method as Example 1, except that the composite fiber for an intake filter (with a shaped cross-section there being circular) was manufactured using an LM polypropylene resin, i.e. a random copolymer, by reacting propylene and ethylene using a comonomer.

### Comparative Example 4

An intake filter was manufactured in the same method as Example 1, except that the intake filter was manufactured at a heat treatment temperature of 135°C by controlling the ratio of the shaped cross-section composite fiber for an intake filter of the fine layer to be 50 wt% of the total weight of the fine layer.

### Comparative Example 5

An intake filter was manufactured in the same method as Example 1, except that the intake filter was manufactured at a heat treatment temperature of 135°C by controlling the ratio of the shaped cross-section composite fiber for an intake filter of the fine layer to be 40 wt% of the total weight of the fine layer.

### Comparative Example 6

An intake filter was manufactured in the same method as Example 1, except that the intake filter was manufactured at a heat treatment temperature of 130°C by controlling the ratio of the shaped cross-section composite fiber for an intake filter of the fine layer to be 35 wt% of the total weight of the fine layer.

### Comparative Example 7

An intake filter was manufactured in the same method as Example 1, except that the intake filter was manufactured at a heat treatment temperature of 130°C by controlling the ratio of the shaped cross-section composite fiber for an intake filter of the fine layer to be 30 wt% of the total weight of the fine layer.

### Comparative Example 8

Comparative Example 8 is an AC-3421 intake filter, a conventional intake filter.

### Experimental Example 1

### Measurement of Performance of Intake Filter according to Connection Type of Sheath and Shaped Cross-Section of Composite Fiber for Intake Filter

The performance of intake filters, i.e. trapping efficiency and pressure loss, was measured by varying the connection type of the sheath and the shaped cross-section of the composite fiber, and results are represented in Tables 1 and 2.

**Table 1**

| Category (Unit | | Ex. 1 | Ex. 2 | Ex. 3 | Ex. 4 | Ex. 5 |
|---|---|---|---|---|---|---|
| Sheath | | Random Terpolymer | Random Terpolymer | Random Terpolymer | Random Copolymer | Random Copolymer |
| Peroxide Content (ppm) | | 150 | 150 | 150 | 150 | 150 |
| Cross-Section | | Ellipse | Concave-Convex Structure | Concave-Convex Structure | Ellipse | Concave-Convex Structure |
| Fineness (Denier) | | 1.5 | 1.5 | 1.5 | 1.5 | 1.5 |
| Filter Medium | Weight (g/m²) | 30 | 30 | 30 | 30 | 30 |
| | Thickness (mm) | 3.0 | 3.0 | 3.0 | 3.0 | 3.0 |
| Filter Performance | Trapping Efficiency (%) | 89 | 85 | 88 | 83 | 84 |
| | Pressure Loss (mmAq) | 3 | 2.8 | 3.7 | 2.7 | 2.7 |
| Measuring method: | | | | | | |
| - Trapping efficiency (%): Measured by an aerial method at an air speed of 3 m/min. Trapping efficiency was examined with a particle size ranging from 0.3 to 10 micrometers. Trapping efficiency was represented by trapping ratio of particles equal to or smaller than 5 micrometers. | | | | | | |
| - Pressure loss (mmAq): Measured by an aerial method at an air speed of 3 m/min. Initial pressure loss was recorded in measurement. | | | | | | |

**Table 2**

| Category (Unit) | | Comp. Ex. 1 | Comp. Ex. 2 | Comp. Ex. 3 |
|---|---|---|---|---|
| Sheath | | Homopolymer | Block Polymer | Random Polymer) |
| Peroxide Content (ppm) | | 150 | 150 | 150 |
| Cross-Section | | Circle | Circle | Circle |
| Fineness (Denier) | | 1.5 | 1.5 | 1.5 |
| Filter Medium | Weight (g/m²) | Impossible to Manufacture Unwoven Cloth | Impossible to Manufacture Unwoven Cloth | 30 |
| | Thickness (mm) | - | - | 3.0 |
| Filter Performance | Trapping Efficiency (%) | - | - | 80 |
| | Pressure Loss (mmAq) | - | - | 2.6 |
| Measuring method: | | | | |
| - Trapping efficiency (%): Measured by an aerial method at an air speed of 3 m/min. Trapping efficiency was examined with a particle size ranging from 0.3 to 10 micrometers. Trapping efficiency was represented by trapping ratio of particles equal to or smaller than 5 micrometers. | | | | |
| - Pressure loss (mmAq): Measured by an aerial method at an air speed of 3 m/min. Initial pressure loss was recorded in measurement. | | | | |

When the intake filters according to the above Examples were manufactured and measured, in a situation in which a composite fiber for an intake filter is manufactured to have a circular cross-section, with the shaped cross-section thereof failing to satisfy the cross-section ratio 1.5, it was appreciated that no unwoven cloth including the composite fiber was manufactured.

In addition, the unwoven cloth can be manufactured by forming the shaped cross-section of the composite fiber for an intake filter to have a concave-convex structure. When intake filters are manufactured, an intake filter, in which the binding of the sheath was accomplished using a random terpolymer, had higher trapping efficiency and higher pressure loss performance, than an intake filter, in which a random copolymer was used.

In addition, it was appreciated that an intake filter, in which the composite fiber was manufactured such that the shaped cross-section thereof had an elliptical structure, had better performance than an intake filter, in which the shaped cross-section of the composite fiber had a concave-convex structure.

### Experimental Example 2: Measurement of Performance of Intake Filter according to Ratio of Fine Layer with respect to Composite Fiber

The performance of intake filters was measured by varying the weight percent (wt%) of the shaped cross-section composite fiber for an intake filter with respect to the total weight of the fine layer. Measurements were performed according to the Test Standard KS R ISO 5011:2008, at a rated air volume of 5.2m²/min. Results are represented in Tables 3 and 4.

**Table 3**

| Performance Evaluation Criteria (Unit) | Ex. 1 | Ex. 6 | Ex. 7 | Ex. 8 | Comp. Ex. 8 |
|---|---|---|---|---|---|
| Filter Restriction (mmAq) | 47.85 | 46.83 | 48.14 | 46.51 | 49.42 |
| Initial Efficiency (%) | 98.64 | 98.48 | 98.69 | 98.21 | 98.75 |
| Final Efficiency (%) | 99.58 | 99.51 | 99.62 | 99.56 | 99.52 |
| Dirt holding capacity (DHC) (g) | 186.24 | 186.24 | 172.64 | 182.42 | 187 |
| <Target Criteria> | | | | | |
| * Initial Efficiency: 98.4% or higher | | | | | |
| * Final Efficiency: 99.5% or higher | | | | | |
| * Dirt holding capacity: 180g or more | | | | | |
| Cf) In dirt holding capacity (DHC), trapping amount varies depending on the displacement of an engine or the capacity of an air cleaner. The goal of the weight (g) ranges from 150g to 200g. 200g is a maximum of the goal. | | | | | |

**Table 4**

| Performance Evaluation Criteria (Unit) | Comp. Ex. 4 | Comp. Ex. 5 | Comp. Ex. 6 | Comp. Ex. 7 | Comp. Ex. 8 |
|---|---|---|---|---|---|
| Filter Restriction (mmAq) | 42.23 | 40.10 | 47.17 | 49.42 | 49.42 |
| Initial Efficiency (%) | 97.62 | 96.12 | 96.79 | 96.19 | 98.75 |
| Final Efficiency (%) | 99.23 | 98.20 | 98.94 | 98.48 | 99.52 |
| Dirt Holding Capacity (DHC) (g) | 181.62 | 172.53 | 177.73 | 167.94 | 187 |
| <Target Criteria> | | | | | |
| * Initial Efficiency: 98.4% or higher | | | | | |
| * Final Efficiency: 99.5% or higher | | | | | |
| * Dirt holding capacity: 180g or more | | | | | |

The intake filters according to the above Examples were manufactured by varying the ratio of the composite fiber for an intake filter of the fine layer, and the performance of the intake filters was measured. The intake filters manufactured according to Example 1 and Example 6 to 8 had performance equal to or higher than target criteria. In particular, it was appreciated that the intake filter manufactured according to Example 1 had substantially the same filter performance as the conventional intake filter according to Comparative Example 8.

In contrast, it was appreciated that the intake filters manufactured according to Comparative Examples 4 to 7 had filter restriction of 42.23 mmAq to 47.52 mmAq, lower than the filter restriction of a conventional intake filter, initial efficiencies lower than 98.4%, final efficiencies lower than 99.5, and direct holding capacities less than the criterion 180g. Accordingly, it was appreciated that the performance of the intake filters manufactured according to Comparative Examples 4 to 7 are inferior to those of Example 1 and Examples 6 to 8.

As a result, it was appreciated that the filter performance was equal to or higher than target criteria when the intake filters were manufactured by setting the ratio of the composite fiber for an intake filter of the fine layer to the range of 55% to 75%, as in the case of Example 1 and Examples 6 to 8.

As set forth above, the intake filter according to embodiments of the present disclosure can be manufactured under optimal conditions, such as a suitable ratio of polypropylene, i.e. the single material of serving as a filter medium, and heat treatment conditions. Accordingly, the intake filter according to the present disclosure can have the same performance as the conventional intake filter, while the cost and weight thereof are reduced due to reduced components and materials and reduced number of process steps.

Although the exemplary embodiments of the present disclosure have been described for illustrative purposes, those skilled in the art will appreciate that various modifications, additions and substitutions are possible, without departing from the scope and spirit of the present disclosure as disclosed in the accompanying claims. The foregoing embodiments disclosed herein shall be interpreted as being illustrative, while not being limitative, in all aspects.

## Claims

1. A shaped cross-section composite fiber for an intake filter, the shaped cross-section composite fiber comprising:
a sheath comprising a reformed polypropylene resin; and
a core comprising a polypropylene resin,
wherein the sheath and the core are combined to provide a sheath-core structure.

2. The shaped cross-section composite fiber according to claim 1, wherein the content of the sheath ranges from 40 wt% to 60 wt%, and the content of the core ranges from 40 wt% to 60 wt%.

3. The shaped cross-section composite fiber according to claim 1 or 2, wherein the reformed polypropylene resin comprises one selected from the group consisting of propylene, ethylene, butene, and combinations thereof, and
wherein the reformed polypropylene resin comprises one selected from the group consisting of random copolymer, random terpolymer, and combinations thereof, and
wherein the reformed polypropylene resin has a melting point of 130°C to 135°C and a melt flow rate of 17g/10min to 23g/10min.

4. The shaped cross-section composite fiber according to any one of claims 1 to 3, wherein the sheath further comprises peroxide.

5. The shaped cross-section composite fiber according to any one of claim 1 to 4, wherein the polypropylene resin has a melting point of 160°C to 163°C and a melt flow rate of 13g/10min to 19g/10min.

6. The shaped cross-section composite fiber according to any one of claims 1 to 5, wherein the shaped cross-section composite fiber has a fineness value of 1 to 5 deniers.

7. The shaped cross-section composite fiber according to any one of claims 1 to 6, wherein the shaped cross-section of the shaped cross-section composite fiber has a structure selected from the group consisting of a circular structure, an elliptical structure, a rectangular structure, a concave-convex structure, a hollow structure, a structure comprised of circles or rectangles connected in line, and combinations thereof.

8. The shaped cross-section composite fiber according to any one of claims 1 to 7, wherein the core has a cross-sectional shape the same as or different from the cross-sectional shape of the shaped cross-section of the shaped cross-section composite fiber.

9. An intake filter, comprising:
an unwoven cloth layer including a fine layer, a middle layer, and a bulk layer,
wherein each of the fine layer, the middle layer, and the bulk layer includes a shaped cross-section composite fiber, the shaped cross-section composite fiber comprising:
a sheath comprising a reformed polypropylene resin; and
a core comprising a polypropylene resin,
wherein the sheath and the core are combined to provide a sheath-core structure.

10. The intake filter according to claim 9, wherein a ratio of a polypropylene fiber in the fine layer with respect to the shaped cross-section composite fiber for an intake filter ranges from 0.33 to 0.81, and the polypropylene fiber and the shaped cross-section composite fiber have a diameter of 10 µm to 30 µm and a weight of 20 g/m² to 150 g/m².

11. The intake filter according to claim 9 or 10, wherein a ratio of a polypropylene fiber in the middle layer with respect to the shaped cross-section composite fiber for an intake filter ranges from 0.42 to 0.81, and the polypropylene fiber and the shaped cross-section composite fiber have a diameter of 20 µm to 50 µm and a weight of 10 g/m² to 50 g/m².

12. The intake filter according to any one of claims 9 to 11, wherein a ratio of a polypropylene fiber in the bulk layer with respect to the shaped cross-section composite fiber for an intake filter ranges from 0.11 to 0.18, and the polypropylene fiber and the shaped cross-section composite fiber have a diameter of 30 µm to 80 µm and a weight of 10 g/m² to 50 g/m².

13. The intake filter according to any one of claims 9 to 12, the intake filter having a trapping efficiency of 82% to 89%, a pressure loss of 2.6 mmAq to 3.1 mmAq, air restriction of 47.80 mmAq to 48.20 mmAq, an initial efficiency of 98.40% to 98.70%, a final efficiency of 99.50% to 99.65% and dirt holding capacity of 170g to 188g.

14. A method of manufacturing an intake filter, the method comprising:
manufacturing an unwoven cloth layer including a fine layer, a middle layer, and a bulk layer by carding;
manufacturing a composite unwoven cloth by performing needle punching to the unwoven cloth layer;
heat-treating the composite unwoven cloth; and
winding the heat-treated composite unwoven cloth.

15. The method according to claim 14, wherein the needle punching is performed such that the number of times of punching the unwoven cloth layer is 10 to 100 times per 1cm² of the unwoven cloth layer and a depth of penetration into the unwoven cloth layer is 2 mm to 15 mm, and
wherein the heat treatment is performed at a temperature of 100°C to 170°C for a time length of 10 to 30 seconds, and
wherein the winding is performed at a speed of 5 M/min to 30 M/min.
